(19) Europäisches Patentamt / European Patent Office / Office européen des brevets

(11) **EP 3 168 972 A1**

(12) **EUROPEAN PATENT APPLICATION**
published in accordance with Art. 153(4) EPC

(43) Date of publication:
**17.05.2017 Bulletin 2017/20**

(51) Int Cl.:
**H02M 1/42** *(2007.01)*

(21) Application number: **14897047.8**

(22) Date of filing: **21.10.2014**

(86) International application number:
**PCT/CN2014/089081**

(87) International publication number:
**WO 2016/004700 (14.01.2016 Gazette 2016/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.07.2014 CN 201410331998**

(71) Applicant: **Midea Group Co., Ltd.**
**Foshan, Guangdong 528311 (CN)**

(72) Inventor: **ZHANG, Guozhu**
**Foshan**
**Guangdong 528311 (CN)**

(74) Representative: **Maiwald Patentanwalts GmbH**
**Engineering**
**Elisenhof**
**Elisenstrasse 3**
**80335 München (DE)**

(54) **STAGGERED POWER FACTOR CORRECTOR**

(57) A staggered power factor corrector (1) comprises a first PFC module (10), a second PFC module (20), a current sampling resistor (R1), a current detection module (30), a voltage detection module (40), and a control module (50). The current detection module (30) is used for detecting a current I1 flowing through a first switch device (Q1) in the first PFC module, a current I2 flowing through a second switch device (Q2) in the second PFC module and a current Iin flowing through the first switch device and the second switch device. The voltage detection module (40) is used for detecting a voltage U1 input into the staggered power factor corrector and an output voltage U2 of the staggered power factor corrector. The control module (50) is used for generating, according to the current I1, the current I2, the current Iin, the voltage U1, the voltage U2 and a preset target output voltage, a first PWM control signal for controlling the first switch device and a second PWM control signal for controlling the second switch device, wherein a difference between the first PWM control signal and the second PWM control signal is half of a carrier period. The staggered power factor corrector has lower circuit cost.

Fig. 1

## Description

## FIELD

The present disclosure relates to field of circuit technology, and more particularly, to an interleaved power factor corrector.

## BACKGROUND

In order to reduce pollution of current harmonic and reactive power generated by an electric device to the power grid, the current harmonic of the electric device needs to meet certain harmonic standards. In order to meet the harmonic standards, the electric device needs to carry on power factor correction (PFC for short). In this context, various power factor correction technologies have been proposed and applied to the electric device.

The interleaved PFC solution is receiving more and more attention because of small harmonic current and high reliability. The current interleaved PFC solution usually uses a two-way symmetrical boost-type circuit structure. Although the circuit structure is symmetrical, it may still cause current imbalance of the two-way symmetrical boost-type circuit structure because of component differences such as differences between inductors, resulting in too large current of one switch tube. When the current of the switch tube reaches a certain level, it may burn out the switch tube, making the whole circuit failure. Therefore, the interleaved PFC solution also carries on current balance control on two switch tubes in addition to carrying on the power factor correction.

In the related art, two following solutions are proposed to realize the current balance control on the two-way switch tubes. The first solution proposes a power factor correction device for sampling a total current of the two-way symmetrical boost-type circuit, and a current of one circuit in the two-way symmetrical boost-type circuit. The power factor correction device uses a difference between the total current of the two-way symmetrical boost-type circuit and the current of the one circuit in the two-way symmetrical boost-type circuit as an estimated value of the other one circuit in the two-way symmetrical boost-type circuit, and carries on the current balance control on the two-way switch tubes based on the estimated value. The second solution proposes an interleaved PFC solution for sampling currents on the two switch tubes respectively. This solution may calculate a duty ratio of the switch tube and achieve current balance without sampling the total current of the two-way symmetrical boost-type circuit.

However, both of the above-mentioned related technologies require at least two current sensors to realize the interleaved PFC solution for performing the current balance on the two switch tubes. Therefore, the circuit cost is high.

## SUMMARY

The present disclosure aims to solve at least one of the above problems to some extent at least.

Accordingly, an objective of the present disclosure is to provide an interleaved power factor corrector, which may have the lower circuit cost.

In order to achieve above objectives, embodiments of the present disclosure provide an interleaved power factor corrector. The interleaved power factor corrector includes: a first PFC module including a first energy storage inductor, a first switch component and a first fast recovery diode; a second PFC module, parallel to the first PFC module and including a second energy storage inductor, a second switch component and a second fast recovery diode, in which the second switch component is connected to the first switch component and a first node is between the second switch component and the first switch component; a current sampling resistor, in which a first terminal of the current sampling resistor is connected to the first node and a second terminal of the current sampling resistor is grounded; a current detection module, connected to the first node and configured to detect a current I1 flowing through the first switch component, to detect a current I2 flowing through the second switch component and to detect a current Iin flowing through the first switch component and the second switch component, each detection is based on a sampling signal generated by the current sampling resistor; a voltage detection module, configured to detect a voltage U1 inputted into the interleaved power factor corrector and an output voltage U2 of the interleaved power factor corrector; and a control module, connected to the current detection module, the voltage detection module, a control terminal of the first switch component and a control terminal of the second switch component respectively and configured to generate a first pulse-width modulation PWM control signal for controlling the first switch component and a second PWM control signal for controlling the second switch component based on the current I1, the current I2, the current Iin, the voltage U1, the voltage U2 and a preset target output voltage, in which the first PWM control signal is different from the second PWM control signal by a half of a carrier period.

With the interleaved power factor corrector provided in embodiments of the present disclosure, after the current detection module detects the current I1 flowing through the first switch component of the first PFC module, the current I2 flowing through the second switch component of the second PFC module, and the current Iin flowing through the first switch component and the second switch component, and after the voltage detection module detects the voltage U1 inputted into the interleaved power factor corrector and the output voltage U2 of the interleaved power factor corrector, the control module generates the first PWM control signal for controlling the first switch component and the second PWM control signal for controlling the second switch component (the first PWM control signal is different from the second PWM control signal by a half of the carrier period) based on the current I1, the current I2, the current Iin, the voltage U1, the voltage U2 and the preset target output voltage. The interleaved power factor corrector may perform the current balance control on the current I1 of the first switch component and the current I2 of the second switch component, and may realize current sampling via only one current sampling resistor, thereby reducing the circuit cost.

Further, in an embodiment of the present disclosure, when a turn-on period of the first switch component and a turn-on period of the second switch component do not have an overlapping part, the current detection module is configured to detect the current I1 when the first switch component is in a turn-on status, and to detect the current I2 when the second switch component is in a turn-on status, and to calculate the current Iin based on the current I1 and the current I2.

Further, in an embodiment of the present disclosure, when a turn-on period of the first switch component is partially overlapped with a turn-on period of the second switch component, the current detection module is configured to detect the current I1 when the first switch component is in a turn-on status and the second switch component is in a turn-off status, and to detect the current I2 when the second switch component is in a turn-on status and the first switch component is in a turn-off status, and to calculate the current Iin based on the current I1 and the current I2; or the current detection module is configured to detect the current I1 when the first switch component is in a turn-on status and the second switch component is in a turn-off status, and to detect the current I2 when the second switch component is in a turn-on status and the first switch component is in a turn-off status, and to detect the current Iin when the first switch component is in the turn-on status and the second switch component is in the turn-on status; or the current detection module is configured to detect the current I1 when the first switch component is in a turn-on status and the second switch component is in a turn-off status, and to detect the current Iin when the first switch component is in the turn-on status and the second switch component is in a turn-on status, and to calculate the current I2 based on the current I1 and the current Iin; or the current detection module is configured to detect the current I2 when the second switch component is in a turn-on status and the first switch component is in a turn-off status, and to detect the current Iin when the first switch component is in a turn-on status and the second switch component is in the turn-on status, and to calculate the current I1 based on the current I2 and the current Iin.

Further, in an embodiment of the present disclosure, the control module further includes: a PFC control unit, configured to generate a first duty ratio signal in each carrier cycle based on the current Iin, the voltage U1, the voltage U2, and the preset target output voltage; a duty ratio adjustment unit, configured to calculate a duty ratio adjustment value based on the current I1 and the current I2; a first calculating unit, configured to calculate a duty ratio signal of the first switch component based on the first duty ratio signal and the duty ratio adjustment value; a second calculating unit configured to calculate a duty ratio signal of the second switch component based on the first duty ratio signal and the duty ratio adjustment value; a first saw-tooth wave generating unit, configured to output a first saw-tooth wave signal; a second saw-tooth wave generating unit, configured to output a second saw-tooth wave signal; a first PWM control signal generating unit, configured to generate the first PWM control signal based on the duty ratio signal of the first switch component and the first saw-tooth wave signal; and a second PWM control signal generating unit, configured to generate the second PWM control signal based on the duty ratio signal of the second switch component and the second saw-tooth signal.

Further, in an embodiment of the present disclosure, the duty ratio adjustment unit is configured to calculate the duty ratio adjustment value by a formula of

$$\begin{cases} Sum(k) = Sum(k-1) + (I2(k) - I1(k)) \cdot T \\ \Delta D = Kp \cdot (I2(k) - I1(k)) + Ki \cdot Sum(k) \end{cases},$$

where, $Sum(k)$ is an integral value calculated for the $k^{th}$ carrier period, $Sum(k-1)$ is an integral value calculated for the $(k-1)^{th}$ carrier period, $k$ is an integer greater than or equal to 1, $I1(k)$ and $I2(k)$ are sample values of the current I1 and the current I2 for the $k^{th}$ carrier period respectively, T is a length of the carrier period, $Kp$ and $Ki$ are a proportional control coefficient and an integral control coefficient respectively, and $\Delta D$ is the duty ratio adjustment value.

Further, in an embodiment of the present disclosure, the duty ratio signal of the first switch component and the duty ratio signal of the second switch component are calculated by a formula of

$$\begin{cases} D1 = Dtotal + \Delta D \\ D2 = Dtotal - \Delta D \end{cases},$$

where, $D1$ is the duty ratio signal of the first switch component, D2 is the duty ratio signal of the second switch component, $Dtotal$ is the first duty ratio signal and $\Delta D$ is the duty ratio adjustment value.

Further, in an embodiment of the present disclosure, the first saw-tooth wave signal is presented by a formula of

$$F(t)=[t-(k-1)T]/T, \ (k-1)T<t\leqslant kT$$

where, F(t) is the first saw-tooth wave signal, T is a length of the carrier period, and k is an integer greater than or equal to 1.

Further, in an embodiment of the present disclosure, the first PWM control signal generating unit is configured to output 1 if a difference between the duty ratio signal of the first switch component and the first saw-tooth wave signal is greater than 0, and to output 0 if the difference between the duty ratio signal of the first switch component and the first saw-tooth wave signal is less than or equal to 0; and the second PWM control signal generating unit is configured to output 1 if a difference between the duty ratio signal of the second switch component and the second saw-tooth wave signal is greater than 0, and to output 0 if the difference between the duty ratio signal of the second switch component and the second saw-tooth wave signal is less than or equal to 0.

Further, in an embodiment of the present disclosure, each of the first switch component and the second switch component is an insulated-gate bipolar-transistor (IGBT), and an emitter of the first IGBT is connected to an emitter of the second IGBT, and the first node is between the emitter of the first IGBT and the emitter of the second IGBT.

Additional aspects and advantages of embodiments of the present disclosure will be given in part in the following descriptions, become apparent in part from the following descriptions, or be learned from the practice of the embodiments of the present disclosure.

## BRIEF DESCRIPTION OF THE DRAWINGS

These and other aspects and advantages of embodiments of the present disclosure will become apparent and more readily appreciated from the following descriptions made with reference to the accompanying drawings, in which:

Fig. 1 is a schematic diagram illustrating an interleaved power factor corrector according to an embodiment of the present disclosure;
Fig. 2 is a schematic diagram illustrating detecting currents in an interleaved power factor corrector according to an embodiment of the present disclosure;
Fig. 3 is a schematic diagram illustrating detecting currents in an interleaved power factor corrector according to another embodiment of the present disclosure;
Fig. 4 is a schematic diagram illustrating detecting currents in an interleaved power factor corrector according to still another embodiment of the present disclosure;
Fig. 5 is a schematic diagram illustrating a control module of an interleaved power factor corrector according to an embodiment of the present disclosure;
Fig. 6 is a schematic diagram illustrating a duty radio signal, a saw-tooth wave signal and a PWM control signal of an interleaved power factor corrector according to an embodiment of the present disclosure; and
Fig. 7 is a schematic diagram illustrating waveforms of output currents of an interleaved power factor corrector according to an embodiment of the present disclosure.

## DETAILED DESCRIPTION

Reference will be made in detail to embodiments of the present disclosure. Embodiments of the present disclosure will be shown in drawings, in which the same or similar elements and the elements having same or similar functions are denoted by like reference numerals throughout the descriptions. The embodiments described herein according to drawings are explanatory and illustrative, not construed to limit the present disclosure.

Various embodiments and examples are provided in the following description to implement different structures of the present disclosure. In order to simplify the present disclosure, certain elements and settings will be described. However, these elements and settings are only by way of example and are not intended to limit the present disclosure. In addition, reference numerals may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied. Moreover, a structure in which a first feature is "on" a second feature may include an embodiment in which the first feature directly contacts the second feature, and may also include an embodiment in which an additional feature is formed between the first feature and the second feature so that the first feature does not directly contact the second feature.

In the description of the present disclosure, it should be noted that, unless specified or limited otherwise, the terms "mounted," "connected," and "coupled" and variations thereof are used broadly and encompass such as mechanical or electrical mountings, connections and couplings, also can be inner mountings, connections and couplings of two components, and further can be direct and indirect mountings, connections, and couplings, which can be understood by those skilled in the art according to the detail embodiment of the present disclosure.

An interleaved power factor corrector 1 provided by embodiments of the present disclosure will be described with reference to the accompanying drawings as follows.

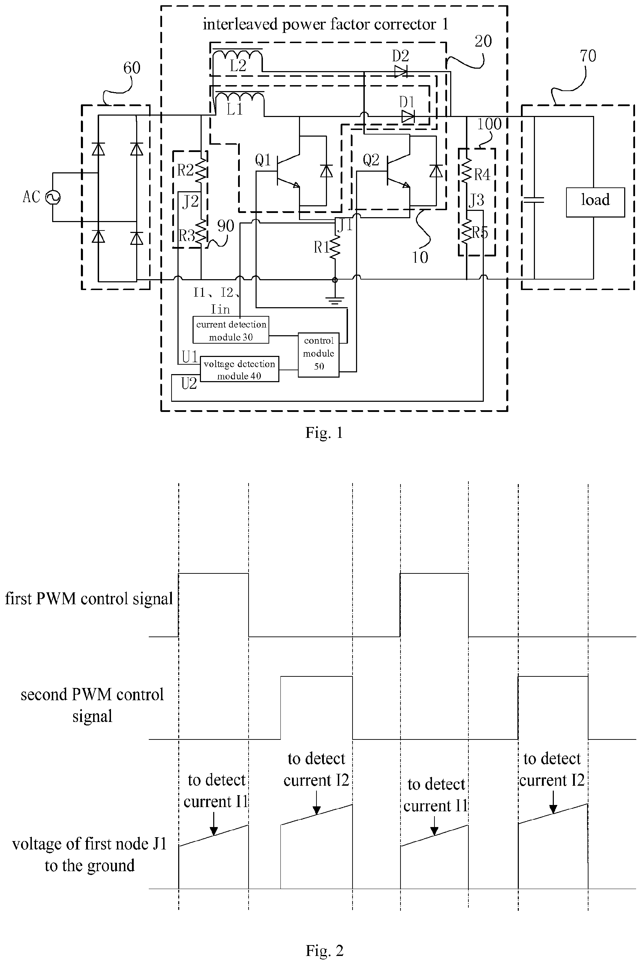

As shown in Fig. 1, the interleaved power factor corrector 1 according to embodiments of the present disclosure includes a first PFC module 10, a second PFC module 20, a current sampling resistor R1, a current detection module 30, a voltage detection module 40 and a control module 50 (for example, a Micro Control Unit).

The first PFC module 10 includes a first energy storage inductor L1, a first switch component Q1 and a first fast recovery diode D1. The second PFC module 20 is parallel to the first PFC module 10. The second PFC module 20 includes a second energy storage inductor L2, a second switch component Q2 and a second fast recovery diode D2. The second switch component Q2 such as an emitter of a second Insulated Gate Bipolar Transistor (IGBT for short) is connected to the first switch component Q1 such as an emitter of a first IGBT, and a first node J1 is between the two switch components. Therefore, according to an embodiment of the present disclosure, as shown in Fig. 1, the first switch component Q1 and the second switch component Q2 are IGBTs, and the emitter of the first IGBT is connected to the emitter of the second IGBT, and the first node J1 is between the emitter of the first IGBT and the emitter of the second IGBT. Certainly, in other embodiments of the present disclosure, the first switch component Q1 and the second switch component Q2 may also be Metal Oxide Semiconductor (MOS for short) transistors, and the first node J1 is between a source of the first MOS transistor and a source of the second MOS transistor.

In detail, according to an example of the present disclosure, an inductance value of each of the first energy storage inductor L1 and the second energy storage inductor L2 is in a range of 100 uH to 9 mH.

As shown in Fig. 1, a first terminal of the current sampling resistor R1 is connected to the first node J1 and a second terminal of the current sampling resistor R2 is grounded. The current sampling resistor R1 generates respective corresponding sampling signals according to a current flowing through the first switch component Q1, a current flowing through the second switch component Q2, and a total current flowing through the first switch component Q1 and the second switch component Q2. The current detection module 30 is connected to the first node J1. The current detection module 30 is configured to detect a current I1 flowing through the first switch component Q1, a current I2 flowing through the second switch component Q2 and a total current Iin flowing through the first switch component Q1 and the second switch component Q2 based on sampling signals generated by the current sampling resistor R1. The voltage detection module 40 is configured to detect a voltage U1 inputted into the interleaved power factor corrector 1 and an output voltage U2 of the interleaved power factor corrector 1. The control module 50 is connected to the current detection module 30, the voltage detection module 40, a control terminal of the first switch component Q1 and a control terminal of the second switch component Q2 respectively. The control module 50 is configured to generate a first PWM control signal for controlling the first switch component Q1 and a second PWM control signal for controlling the second switch component Q2 based on the current I1, the current I2, the current Iin, the voltage U1, the voltage U2 and a preset target output voltage Vref. The first PWM control signal and the second PWM control signal has the same carrier period, and the first PWM control signal is different from the second PWM control signal by a half of the carrier period.

It should be noted that, in an embodiment of the present disclosure, the first PFC module 10 and the second PFC module 20 constitute the two-way symmetrical boost-type circuit. In addition, the current detection module 30 may convert the analog current I1, the analog current I2, and the analog current Iin into digital values by AD conversion and output the digital values to the control module 50. Similarly, the voltage detection module 40 may convert the analog voltage U1 and the analog voltage U2 into digital values by the AD conversion and output the digital values to the control module 50.

In detail, in an embodiment of the present disclosure, as shown in Fig. 1, an input terminal of the interleaved power factor corrector 1 may be connected to a rectifier bridge 60, and an output terminal of the interleaved power factor corrector 1 may be connected to the electric device 70. The rectifier bridge 60 is configured to perform rectification on alternating current (AC for short) output from an AC source. A first output terminal of the rectifier bridge 60 is connected to a first terminal of the first energy storage inductor L1 and a first terminal of the second energy storage inductor L2 respectively, and a second output terminal of the rectifier bridge 60 is connected to ground. A second terminal of the first energy storage inductor L1 is connected to a collector of the first switch component Q1 and an anode of the first fast recovery diode D1 respectively. A cathode of the first fast recovery diode D1 is connected to a first terminal of the electric device 70. A second terminal of the second energy storage inductor L2 is connected to a collector of the second switch component Q2 and an anode of the second fast recovery diode D2 respectively. A cathode of the second fast recovery diode D2 is connected to the first terminal of the electric device 70. A second terminal of the electric device 70 is connected to ground. The first switch component Q1 is turned on and off according to the first PWM controls signal, and the second switch component Q2 is turned on and off according to the second PWM control signal, so as to realize power factor correction and harmonic suppression on the input current of the electric device 70 and to realize current balance control on the first switch component Q1 and the second switch component Q2.

Further, in an embodiment of the present disclosure, as shown in Fig. 1, the interleaved power factor corrector 1 further includes a first voltage sampling module 90 and a second voltage sampling module 100. The first voltage sampling module 90 may include a second resistor R2 and a third resistor R3 connected in series. A second node J2 is between the second resistor R2 and the third resistor R3. A first terminal of the second resistor R2 is connected to the first output terminal of the rectifier bridge 60, and a first terminal of the third resistor R3 is connected to ground. A first input terminal of the voltage detection module 40 is connected to the second node J2. The voltage detection module 40 is configured to detect the voltage U1 inputted into the interleaved power factor corrector 1 based on signals sampled by the first voltage sampling module 90. The second voltage sampling module 100 may include a fourth resistor R4 and a fifth resistor R5 connected in series. A third node J3 is between the fourth resistor R4 and the fifth resistor R5. A first terminal of the fourth resistor R4 is connected to the cathode of the first fast recovery diode D1 and the cathode of the second fast recovery diode D2 respectively, and a first terminal of the fifth resistor R5 is connected to ground. A second input terminal of the voltage detection module 40 is connected to the third node J3. The voltage detection module 40 is configured to detect the output voltage U2 of the interleaved power factor corrector 1 based on signals sampled by the second voltage sampling module 100.

Therefore, when the interleaved power factor corrector 1 in embodiments of the present disclosure detects the current I1 flowing through the first switch component Q1, the current I2 flowing through the second switch component Q2, the total current Iin flowing through the first switch component Q1 and the second switch component Q2, the voltage U1 inputted into the interleaved power factor corrector 1 and the output voltage U2 of the interleaved power factor corrector 1, it may be realized by corresponding signal processing by using only a few simple sampling resistors such as R1, R2, R3, R4, R5, the current detection module 30 and the voltage detection module 40, thereby reducing the circuit cost greatly.

Further, in an embodiment of the present disclosure, when a turn-on period of the first switch component Q1 and a turn-on period of the second switch component Q2 do not have an overlapping part, the current detection module 30 is configured to detect the current I1 when the first switch component Q1 is in a turn-on status, and to detect the current I2 when the second switch component Q2 is in a turn-on status, and to calculate the current Iin based on the current I1 and the current I2.

In detail, in an embodiment of the present disclosure, as shown in Fig. 2, the current detection module 30 may detect the voltage of the first node J1 to the ground when the first switch component Q1 is at a middle point of the turn-on period and use the detected value as the current I1; and may detect the voltage of the first node J1 to the ground when the second switch component Q2 is at a middle point of the turn-on period and use the detected value as the current I2. Further, the current Iin = I1 + I2.

Further, in another embodiment of the present disclosure, when a turn-on period of the first switch component Q1 is partially overlapped with a turn-on period of the second switch component Q2, the current detection module 30 is configured to detect the current I1 when the first switch component Q1 is in a turn-on status and the second switch component Q2 is in a turn-off status, and to detect the current I2 when the second switch component Q2 is in a turn-on status and the first switch component Q1 is in a turn-off status, and to calculate the current Iin based on the current I1 and the current I2. Or, the current detection module 30 is configured to detect the current I1 when the first switch component Q1 is in a turn-on status and the second switch component Q2 is in a turn-off status, and to detect the current I2 when the second switch component Q2 is in a turn-on status and the first switch component Q1 is in a turn-off status, and to detect the current Iin when the first switch component Q1 is in the turn-on status and the second switch component Q2 is in the turn-on status. Or, the current detection module 30 is configured to detect the current I1 when the first switch component Q1 is in a turn-on status and the second switch component Q2 is in a turn-off status, and to detect the current Iin when the first switch component Q1 is in the turn-on status and the second switch component Q2 is in a turn-on status, and to calculate the current I2 based on the current I1 and the current Iin. Or, the current detection module 30 is configured to detect the current I2 when the second switch component Q2 is in a turn-on status and the first switch component Q1 is in a turn-off status, and to detect the current Iin when the first switch component Q1 is in a turn-on status and the second switch component Q2 is in the turn-on status, and to calculate the current I1 based on the current I2 and the current Iin.

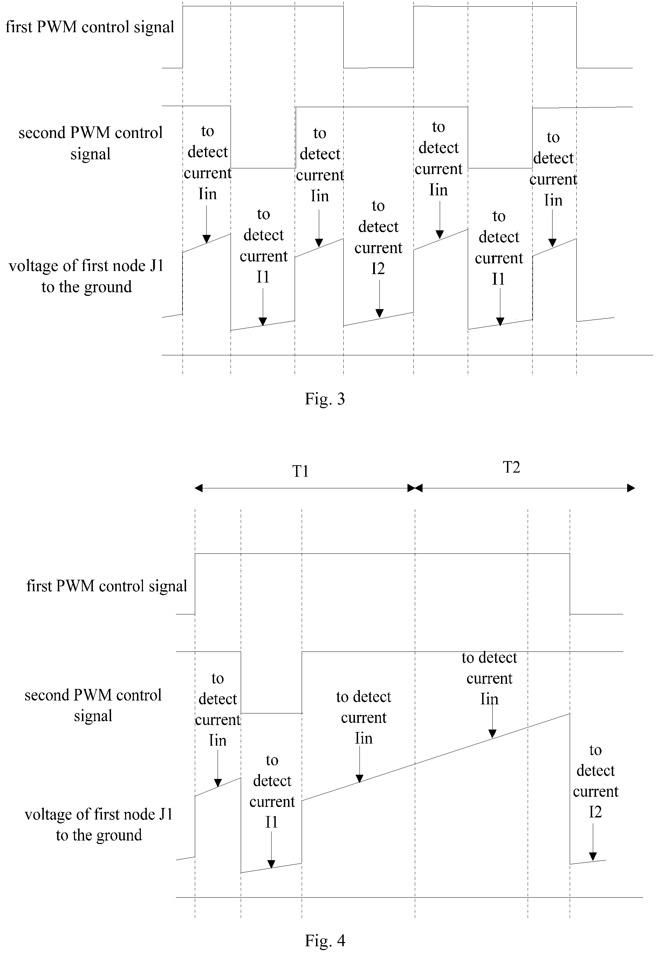

In detail, in an embodiment of the present disclosure, as shown in Fig. 3, the current detection module 30 may detect the voltage of the first node J1 to the ground when the first switch component Q1 is at a middle point of the turn-on period and use the detected value as the current I1; and may detect the voltage of the first node J1 to the ground when the second switch component Q2 is at a middle point of the turn-on period and uses the detected value as the current I2; and may detect the voltage of the first node J1 to the ground when the first switch component Q1 and the second switch component Q2 are at a middle point of respective turn-on periods, and use the detected value as the current Iin.

Further, in still another embodiment of the present disclosure, under steady-state conditions, a turn-on period of the first switch component Q1 may completely overlap with a turn-on period of the second switch component Q2 when an input current of the first switch component Q1 and an input current of the second switch component Q3 are close to zero. When the turn-on period of the first switch component Q1 completely overlaps with the turn-on period of the second switch component Q2, the current detecting module 30 may detect the current Iin only and cannot detect the current I1 and the current I2.

For example, in an embodiment of the present disclosure, as shown in Fig. 4, when both the first switch component Q1 and the second switch component Q2 are in the turn-on status, the voltage of the first node J1 to the ground is detected when the first switch component Q1 is at a middle point of the turn-on period, or the voltage of the first node J1 to the ground is detected when the second switch component Q2 is at a middle point of the turn-on period, and both the detected values are the current Iin. T1 is the first carrier period and T2 is the second carrier period. However, since the input currents of the first switch component Q1 and the second switch component Q2 are close to zero at this time, it does not need to consider the current balance of the first switch component Q1 and the second switch component Q2. In fact, the probability that the turn-on period of the first switch component Q1 completely overlaps with the turn-on period of the second switch component Q2 is very low and it does not affect overall effect of current balance control performed by the interleaved power factor corrector 1 in embodiments of the present disclosure on the first switch component Q1 and the second switch component Q2.

It should be noted that, in Fig. 2, Fig. 3 and Fig. 4, the first switch component Q1 is turned on when the first PWM control signal is at the high level, the first PWM control signal is at the low level, the second switch component Q1 is turned off when the first PWM control signal is at the low level, the second switch component Q2 is turned on when the second PWM control signal is at the high level, and the second switch component Q2 is turned off when the second PWM control signal is at the low level.

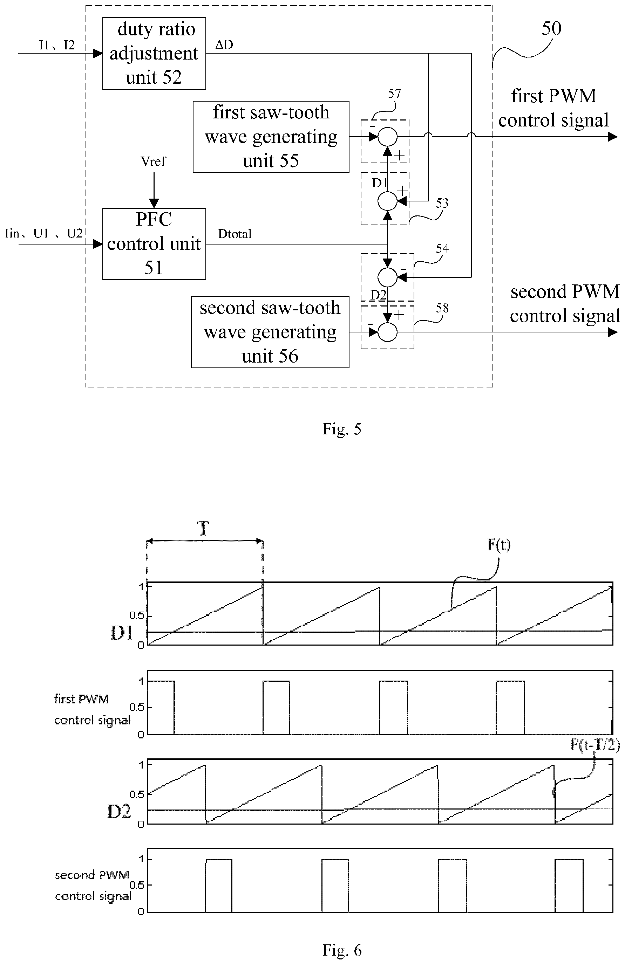

Further, in an embodiment of the present disclosure, as shown in Fig. 5, the control module 50 further includes a PFC control unit 51, a duty ratio adjustment unit 52, a first calculating unit 53, a second calculating unit 54, a first saw-tooth wave generating unit 55, a second saw-tooth wave generating unit 56, a first PWM control signal generating unit 57, and a second PWM control signal generating unit 58. According to single-cycle algorithm or average current method or the like, in each carrier cycle (in each carrier cycle of the first switch component Q1 and in each carrier cycle of the second switch component Q2), the PFC control unit 51 may generate a first duty ratio signal based on the current Iin, the voltage U1, the voltage U2, and the preset target output voltage Vref. The duty ratio adjustment unit 52 is configured to calculate a duty ratio adjustment value based on the current I1 and the current I2. The first calculating unit 53 is configured to calculate a duty ratio signal of the first switch component Q1 based on the first duty ratio signal and the duty ratio adjustment value. The second calculating unit 54 is configured to calculate a duty ratio signal of the second switch component Q2 based on the first duty ratio signal and the duty ratio adjustment value. The first saw-tooth wave generating unit 55 is configured to output a first saw-tooth wave signal. The second saw-tooth wave generating unit 56 is configured to output a second saw-tooth wave signal. The first PWM control signal generating unit 57 is configured to generate the first PWM control signal based on the duty ratio signal of the first switch component Q1 and the first saw-tooth wave signal. The second PWM control signal generating unit 58 is configured to generate the second PWM control signal based on the duty ratio signal of the second switch component Q2 and the second saw-tooth signal.

Further, in an embodiment of the present disclosure, the duty ratio adjustment unit 52 may include a PID controller. The PID controller may calculate the duty ratio adjustment value based on a different of the current I1 and the current I2. In detail, in an embodiment of the present disclosure, the duty ratio adjustment unit 52 may calculate the duty ratio adjustment value by a formula of

$$\begin{cases} Sum(k) = Sum(k-1) + (I2(k) - I1(k)) \cdot T \\ \Delta D = Kp \cdot (I2(k) - I1(k)) + Ki \cdot Sum(k) \end{cases},$$

where, $Sum(k)$ is an integral value calculated for the $k^{th}$ carrier period, $Sum(k-1)$ is an integral value calculated for the $(k-1)^{th}$ carrier period, $k$ is an integer greater than or equal to 1, $I1(k)$ and $I2(k)$ are sample values of the current I1 and the current I2 for the $k^{th}$ carrier period respectively, T is a length of the carrier period, $Kp$ and $Ki$ are a proportional control coefficient and an integral control coefficient respectively, and $\Delta D$ is the duty ratio adjustment value.

It should be noted that, when the turn-on period of the first switch component Q1 completely overlaps with the turn-on period of the second switch component Q2, the current detecting module 30 may detect the current Iin only and cannot detect the current I1 and the current I2. At this time, the duty ratio adjustment value $\Delta D$ cannot be calculated based on the above formula, and the duty ratio adjustment value $\Delta D$ of the current carrier period is not updated and is maintained as the duty ratio adjustment value $\Delta D$ of the previous carrier period.

Further, in an embodiment of the present disclosure, the duty ratio signal of the first switch component Q1 and the duty ratio signal of the second switch component Q2 may be calculated by a formula of

$$\begin{cases} D1 = Dtotal + \Delta D \\ D2 = Dtotal - \Delta D \end{cases},$$

where, $D1$ is the duty ratio signal of the first switch component Q1, D2 is the duty ratio signal of the second switch component Q2, $Dtotal$ is the first duty ratio signal and $\Delta D$ is the duty ratio adjustment value.

Further, in an embodiment of the present disclosure, the first saw-tooth wave signal may be presented by a formula of

$$F(t) = [t-(k-1)T]/T, \ (k-1)T < t \leqslant kT$$

where, F(t) is the first saw-tooth wave signal, T is a length of the carrier period, T is in a range from 10 microseconds to 60 microseconds, and k is an integer greater than or equal to 1.

Further, in an embodiment of the present disclosure, the second saw-tooth wave signal may be presented as F(t-T/2). The second saw-tooth signal is different from the first saw-tooth signal by T/2.

Further, as shown in Fig. 6, in an embodiment of the present disclosure, the first PWM control signal generating unit 57 is configured to output 1 if a difference between the duty ratio signal $D1$ of the first switch component Q1 and the first saw-tooth wave signal F(t) is greater than 0, and to output 0 if the difference between the duty ratio signal $D1$ of the first switch component Q1 and the first saw-tooth wave signal F(t) is less than or equal to 0. The second PWM control signal generating unit 58 is configured to output 1 if a difference between the duty ratio signal D2 of the second switch component Q2 and the second saw-tooth wave signal F(t-T/2) is greater than 0, and to output 0 if the difference between the duty ratio signal D2 of the second switch component Q2 and the second saw-tooth wave signal F(t-T/2) is less than or equal to 0. It may be seen from Fig. 6 that, the first PWM control signal and the second PWM control signal have the same carrier period and have a difference by a half of the carrier period. In each carrier period, each of the first PWM control signal and the second PWM control signal outputs high level once, such that each of the first switch component Q1 and the second switch component Q2 is turned on once during each carrier cycle, thereby greatly increasing the number of turn-ons of the first switch component Q1 and the second switch component Q2, and suppressing effectively the input current harmonics of the electric device 70.

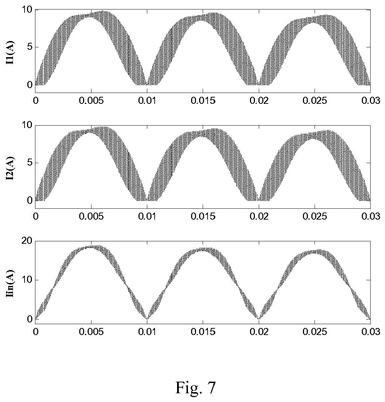

Fig. 7 is a schematic diagram illustrating waveforms of output currents of a interleaved power factor corrector according to an embodiment of the present disclosure. It may be seen from Fig. 7 that, the ripple of the current Iin is significantly smaller than the ripple of the current I1 and the ripple of the current I2, and the current I1 and the current I2 can be substantially consistent with each other due to the balance control on the current I1 and the current I2. In addition, after a large number of experiments are conducted on the electric device with the interleaved power factor corrector provided in embodiments of the present disclosure, experimental results show that the power factor of the electric device with the interleaved power factor corrector provided in embodiments of the present disclosure may reach more than 99%, and the input current harmonics has also been effectively suppressed and may meet the harmonics standards.

With the interleaved power factor corrector provided in embodiments of the present disclosure, after the current detection module detects the current I1 flowing through the first switch component of the first PFC module, the current I2 flowing through the second switch component of the second PFC module, and the current Iin flowing through the first switch component and the second switch component, and after the voltage detection module detects the voltage U1 inputted into the interleaved power factor corrector and the output voltage U2 of the interleaved power factor corrector, the control module generates the first PWM control signal for controlling the first switch component and the second PWM control signal for controlling the second switch component (the first PWM control signal is different from the second PWM control signal by a half of the carrier period) based on the current I1, the current I2, the current Iin, the voltage U1, the voltage U2 and the preset target output voltage. The interleaved power factor corrector may perform the current balance control on the current I1 of the first switch component and the current I2 of the second switch component by adopting the current sampling resistor only, thereby saving the circuit cost greatly and having good power factor correction performance, current balance control performance and current harmonic suppression effect.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, which should be understood by those skilled in the art.

The logic and/or steps described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from scope of the present disclosure.

**Claims**

1. An interleaved power factor corrector, comprising:

a first power factor correction (PFC) module comprising a first energy storage inductor, a first switch component and a first fast recovery diode;
a second PFC module, parallel to the first PFC module and comprising a second energy storage inductor, a second switch component and a second fast recovery diode, wherein the second switch component is connected to the first switch component and a first node is between the second switch component and the first switch component;
a current sampling resistor, wherein a first terminal of the current sampling resistor is connected to the first node and a second terminal of the current sampling resistor is grounded;
a current detection module, connected to the first node and configured to detect a current I1 flowing through the first switch component, to detect a current I2 flowing through the second switch component and to detect a current Iin flowing through the first switch component and the second switch component, each detection is based on a sampling signal generated by the current sampling resistor;
a voltage detection module, configured to detect a voltage U1 inputted into the interleaved power factor corrector and an output voltage U2 of the interleaved power factor corrector; and
a control module, connected to the current detection module, the voltage detection module, a control terminal of the first switch component and a control terminal of the second switch component respectively and configured to generate a first pulse-width modulation (PWM) control signal for controlling the first switch component and a second PWM control signal for controlling the second switch component based on the current I1, the current I2, the current Iin, the voltage U1, the voltage U2 and a preset target output voltage, wherein the first PWM control signal is different from the second PWM control signal by a half of a carrier period.

2. The interleaved power factor corrector according to claim 1, wherein when a turn-on period of the first switch component and a turn-on period of the second switch component do not have an overlapping part, the current detection module is configured to detect the current I1 when the first switch component is in a turn-on status, and to detect the current I2 when the second switch component is in a turn-on status, and to calculate the current Iin based on the current I1 and the current I2.

3. The interleaved power factor corrector according to claim 1, wherein when a turn-on period of the first switch component is partially overlapped with a turn-on period of the second switch component,
the current detection module is configured to detect the current I1 when the first switch component is in a turn-on status and the second switch component is in a turn-off status, and to detect the current I2 when the second switch component is in a turn-on status and the first switch component is in a turn-off status, and to calculate the current Iin based on the current I1 and the current I2; or
the current detection module is configured to detect the current I1 when the first switch component is in a turn-on status and the second switch component is in a turn-off status, and to detect the current I2 when the second switch component is in a turn-on status and the first switch component is in a turn-off status, and to detect the current Iin when the first switch component is in the turn-on status and the second switch component is in the turn-on status; or
the current detection module is configured to detect the current I1 when the first switch component is in a turn-on status and the second switch component is in a turn-off status, and to detect the current Iin when the first switch component is in the turn-on status and the second switch component is in a turn-on status, and to calculate the current I2 based on the current I1 and the current Iin; or
the current detection module is configured to detect the current I2 when the second switch component is in a turn-on status and the first switch component is in a turn-off status, and to detect the current Iin when the first switch component is in a turn-on status and the second switch component is in the turn-on status, and to calculate the current I1 based on the current I2 and the current Iin.

4. The interleaved power factor corrector according to any one of claims 1 to 3, wherein the control module further comprises:

a PFC control unit, configured to generate a first duty ratio signal in each carrier cycle based on the current Iin, the voltage U1, the voltage U2, and the preset target output voltage;
a duty ratio adjustment unit, configured to calculate a duty ratio adjustment value based on the current I1 and the current I2;
a first calculating unit, configured to calculate a duty ratio signal of the first switch component based on the first duty ratio signal and the duty ratio adjustment value;
a second calculating unit, configured to calculate a duty ratio signal of the second switch component based on the first duty ratio signal and the duty ratio adjustment value;
a first saw-tooth wave generating unit, configured to output a first saw-tooth wave signal;
a second saw-tooth wave generating unit, configured to output a second saw-tooth wave signal;
a first PWM control signal generating unit, configured to generate the first PWM control signal based on the duty ratio signal of the first switch component and the first saw-tooth wave signal; and
a second PWM control signal generating unit, configured to generate the second PWM control signal based on the duty ratio signal of the second switch component and the second saw-tooth signal.

5. The interleaved power factor corrector according to claim 4, wherein the duty ratio adjustment unit is configured to calculate the duty ratio adjustment value by a formula of

$$\begin{cases} Sum(k) = Sum(k-1) + (I2(k) - I1(k)) \cdot T \\ \Delta D = Kp \cdot (I2(k) - I1(k)) + Ki \cdot Sum(k) \end{cases},$$

where, $Sum(k)$ is an integral value calculated for the $k^{th}$ carrier period, $Sum(k-1)$ is an integral value calculated for the $(k-1)^{th}$ carrier period, $k$ is an integer greater than or equal to 1, $I1(k)$ and $I2(k)$ are sample values of the current I1 and the current I2 for the $k^{th}$ carrier period respectively, T is a length of the carrier period, $Kp$ and $Ki$ are a proportional control coefficient and an integral control coefficient respectively, and $\Delta D$ is the duty ratio adjustment value.

6. The interleaved power factor corrector according to claim 4, wherein the duty ratio signal of the first switch component and the duty ratio signal of the second switch component are calculated by a formula of

$$\begin{cases} D1 = Dtotal + \Delta D \\ D2 = Dtotal - \Delta D \end{cases},$$

where, $D$1 is the duty ratio signal of the first switch component, D2 is the duty ratio signal of the second switch component, $Dtotal$ is the first duty ratio signal and $\Delta D$ is the duty ratio adjustment value.

7. The interleaved power factor corrector according to claim 4, wherein the first saw-tooth wave signal is presented by a formula of

$$F(t)=[t-(k-1)T]/T, \ (k-1)T<t\leqslant kT$$

where, F(t) is the first saw-tooth wave signal, T is a length of the carrier period, and k is an integer greater than or equal to 1.

8. The interleaved power factor corrector according to claim 4, wherein
the first PWM control signal generating unit is configured to output 1 if a difference between the duty ratio signal of the first switch component and the first saw-tooth wave signal is greater than 0, and to output 0 if the difference between the duty ratio signal of the first switch component and the first saw-tooth wave signal is less than or equal to 0; and
the second PWM control signal generating unit is configured to output 1 if a difference between the duty ratio signal of the second switch component and the second saw-tooth wave signal is greater than 0, and to output 0 if the difference between the duty ratio signal of the second switch component and the second saw-tooth wave signal is less than or equal to 0.

9. The interleaved power factor corrector according to claim 1, wherein each of the first switch component and the second switch component is an insulated-gate bipolar-transistor (IGBT), and an emitter of the first IGBT is connected to an emitter of the second IGBT, and the first node is between the emitter of the first IGBT and the emitter of the second IGBT.

interleaved power factor corrector 1

Fig. 1

first PWM control signal

second PWM control signal

to detect current I1

to detect current I2

to detect current I1

to detect current I2

voltage of first node J1 to the ground

Fig. 2

Fig. 3

Fig. 4

Fig. 5

Fig. 6

Fig. 7

# INTERNATIONAL SEARCH REPORT

| International application No. |
| --- |
| **PCT/CN2014/089081** |

## A. CLASSIFICATION OF SUBJECT MATTER

H02M 1/42 (2007.01) i

According to International Patent Classification (IPC) or to both national classification and IPC

## B. FIELDS SEARCHED

Minimum documentation searched (classification system followed by classification symbols)

H02M; H02J

Documentation searched other than minimum documentation to the extent that such documents are included in the fields searched

Electronic data base consulted during the international search (name of data base and, where practicable, search terms used)

CNPAT, CNKI, WPI, EPODOC: interconnect, double boost, power coefficient, PFC, current balancing, interleav+, boost, power w factor, correct+, voltage, current, balanc+

## C. DOCUMENTS CONSIDERED TO BE RELEVANT

| Category* | Citation of document, with indication, where appropriate, of the relevant passages | Relevant to claim No. |
| --- | --- | --- |
| Y | CN 203645381 U (SHENZHEN HANGSHENG ELECTRONICS CO., LTD.), 11 June 2014 (11.06.2014), description, paragraphs [0021]-[0026], and figure 1 | 1-3, 9 |
| Y | US 2013194848 A1 (BERNARDINIS, G. et al.), 01 August 2013 (01.08.2013), description, paragraphs [0023]-[0038], and figures 2-4 | 1-3, 9 |
| Y | CN 103872895 A (POWER SYSTEMS TECHNOLOGIES LTD.), 18 June 2014 (18.06.2014), description, paragraphs [0017]-[0038], and figures 5-6 | 1-3, 9 |
| A | CN 103532367 A (GREE ELECTRIC APPLIANCES, INC. OF ZHUHAI), 22 January 2014 (22.01.2014), the whole document | 1-9 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 March 2015 (28.03.2015) | **09 April 2015 (09.04.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WU, Wei** Telephone No.: (86-10) **62411688** |
| --- | --- |

Form PCT/ISA/210 (second sheet) (July 2009)

## INTERNATIONAL SEARCH REPORT
Information on patent family members

International application No.

**PCT/CN2014/089081**

| Patent Documents referred in the Report | Publication Date | Patent Family | Publication Date |
|---|---|---|---|
| CN 203645381 U | 11 June 2014 | None | |
| US 2013194848 A1 | 01 August 2013 | None | |
| CN 103872895 A | 18 June 2014 | DE 102013107472 A1 | 18 June 2014 |
| | | US 2014169049 A1 | 19 June 2014 |
| CN 103532367 A | 22 January 2014 | None | |

Form PCT/ISA/210 (patent family annex) (July 2009)